# EUROPEAN PATENT SPECIFICATION

(11) **EP 2 937 489 B1**
(45) Date of publication and mention of the grant of the patent: **04.12.2019**
(21) Application number: 15165694.9
(22) Date of filing: 27.12.2013
(51) Int. Cl.: E04D 13/147, B32B 15/00, B32B 7/12, B32B 7/06, B32B 5/02, B32B 27/32, B32B 7/14, B32B 15/085, B32B 15/14, B32B 15/20, B32B 27/08, B32B 3/06, B32B 3/08, B32B 3/28

(54) **A SKIRT ELEMENT FOR USE IN A FLASHING FOR A ROOF WINDOW AND A METHOD FOR INSTALLATION OF A SKIRT ELEMENT AT A ROOF WINDOW**
SCHÜRZENELEMENT ZUR VERWENDUNG IN EINEM KEHLBLECH FÜR DACHFENSTER UND VERFAHREN ZUR INSTALLATION EINES SCHÜRZENELEMENTS AN EINEM DACHFENSTER
ÉLÉMENT DE JUPE UTILISÉ DANS UN SOLIN POUR FENÊTRE DE TOIT ET PROCÉDÉ POUR L'INSTALLATION D'UN ÉLÉMENT DE JUPE AU NIVEAU D'UNE FENÊTRE DE TOIT

(30) Priority: 27.12.2012 DK 201270827
(43) Date of publication of application: 28.10.2015
(62) Divisional of application: 13199623.3
(73) Proprietor: VKR Holding A/S, 2970 Hørsholm (DK)
(72) Inventor: Melsen, Michael, 8632 Lemming (DK)
(74) Representative: AWA Denmark A/S

(56) References cited:
- EP-A1- 0 942 111
- DE-A1- 19 914 071
- US-A- 4 775 567
- US-A- 5 916 654
- US-A1- 2007 193 126
- US-A1- 2010 040 902

## Description

The present invention relates to a skirt element for use in a flashing for a roof penetrating structure and comprising a skirt member intended to rest on an exterior roof surface, said skirt element having an interior side intended for facing the exterior roof surface and an exterior side intended for facing the exterior in the mounted state, said skirt member comprising a first edge intended to be arranged at the roof penetrating structure, a second edge opposite the first edge and intended to rest on the exterior roof surface and two end edges extending between the first and second edges, and said skirt element comprising an adhesive layer on the interior side of the skirt member and a cover layer covering the adhesive layer in a state of delivery of the skirt element. The invention further relates to a method for installation of a skirt element.

Skirt flashing elements are used for sealing joints between building structures penetrating a roof surface, for example a joint between the frame of a roof window and the surrounding roofing material, particular at the lower horizontal member of the stationary frame of roof windows. A skirt element typically comprises a plate or rail element to be attached to the roof penetrating structure and a skirt member attached to the rail element and adapted for resting on the outer surface of the roofing material. The skirt member is important with regard to securing a well-fitting, stable and secure sealing of the joint between a roof penetrating structure and a roof surface, particularly when using an undulated roofing material such as tiles. It is firmly and closely mounted against the roof surface and should stay in this position for the entire lifetime of the flashing. In order to achieve this, the skirt member is made of a material, which is easy to bend, preferably by hand, and which has a relatively high weight and a low elasticity.

Skirt flashing elements have traditionally been made from lead plates with a thickness of approximately 1 mm. Lead as a flashing material has a number of advantages as it is very easy to deform with only a very limited elasticity, i.e. the lead plate substantially stays in the form into which it is initially bend without any elastic bouncing back. This inherent feature of lead is of great advantage when a lead skirt is shaped directly onto for example an undulated roof surface, since such skirts cannot be bent in excess in order to compensate for possible elastic re-bouncing. Although lead is virtually non-elastic, there may be a minimal re-bouncing, but as lead is a very heavy material, gravity will keep the lead skirt in close contact with the roof surface. The high weight also prevents the skirt from being lifted and bent backwards by heavy winds. Lead, however, is environmentally harmful and has therefore been forbidden for use in construction work in many countries.

Different kinds of skirt flashing elements having a sandwich structure with a stress damping and stabilizing layer of ductile material covered by a foil sheeting have been used as alternatives to lead. The core layer has typically been made out of a polymeric material or bitumen product, and the foil has typically been a thin metal foil, preferably aluminium foil, as described for example in WO01/65029.

For use on roof surfaces in the form of undulated tiles with very deep troughs, these sandwich structures are typically wave-corrugated or pleated giving them a surplus of material, which allows them to stretch so that a good fit between the flashing and roofing may be obtained.

Practice, however, has shown that skirt flashing elements are not always mounted correctly, meaning that the deformation work needed for achieving a tight fit between the skirt material and the roofing material is not completed. This results in gaps between the roofing material and the skirt, which again results in a risk of rain water or snow finding its way into the roof structure and in an increased risk of the skirt being lifted from the roof during heavy winds.

The skirt members have therefore been provided with an adhesive layer on the interior side so that the skirt element adheres to the roofing material, which contributes to preventing the skirt member from bouncing back up. Furthermore, when using a relatively voluminous adhesive layer, the layer itself may fill out smaller gaps between the skirt member and the roofing material, thus leading to a tighter construction and a reduced risk of the skirt member being lifted by heavy winds.

To facilitate handling of the skirt element the adhesive layer will usually be covered in the state of delivery, but unfortunately the person installing the skirt element sometimes forget to remove this cover layer. Moreover, the need for removing the cover layer prompts the person installing the skirt element to bend the skirt member back, thus potentially causing deformations in the skirt element, which may later cause bouncing back and/or may influence the appearance of the skirt element. In other cases the person installing the skirt element chooses to remove the cover layer at a very early stage, resulting in the adhesive layer becoming exposed to dirt and moisture, which may potentially reduce its adhesive properties.

It is therefore the object of the invention to provide an improved skirt element and a method, which makes is easier to install the skirt element without damaging it.

In a first aspect of the invention this is achieved with a skirt element according to claim 1, where in the state of delivery, a part of the cover layer is visible from the exterior side. The cover layer may project from the second edge away from the first edge, from one or both end edges, or from both the second and end edges.

The fact that the cover layer remains visible even when the skirt member is arranged tightly against the roof surface not only means that the risk of forgetting to remove it is considerably reduced. Particularly as the cover layer is of different colour than the exterior side of the skirt member, said colour being a bright colour, such as white, red, yellow, green or blue, which is hard to overlook.

Just as importantly, however, the fact that the cover layer projects over the actual skirt member means that it is very easy for the person installing the skirt element to get a hold of it. Consequently, he will no longer be prone to bending the skirt member back or to remove the cover layer prematurely. To allow the cover layer to be gripped even when wearing gloves, the cover layer extends at least 3 mm from the second edge away from the first edge and/or from one or both end edges away from the opposite end edge.

In some embodiments the cover layer is folded along a fold line, thereby defining two sections of the material on opposite sides of the fold line, and arranged with the fold line extending on the interior side of the skirt element substantially in parallel with the second edge of the skirt member and at least one of the two sections of the cover layer being visible from the exterior side. This further facilitates removal of the cover layer in that section of the cover layer not adhering to the adhesive layer can be pulled on. In doing so a relatively large section of material will be available for getting a good grip of the cover layer and the folded configuration further allows the cover layer to be peeled off the adhesive layer in a direction perpendicular or substantially perpendicular to the second edge without having to lift the skirt member at all. This is particularly so if only the section not adhering to the adhesive layer is projecting from the second edge or if it projects further than the other, so that it is easy to get a hold on this section only.

It is noted that whenever reference is made to a cover layer or a section of a cover layer being visible from the exterior side of the skirt element, it is to be understood that it will usually only be a smaller part of the cover layer or section of a cover layer, which is actually visible, while the rest is hidden underneath the skirt member.

Regardless of the configuration of the cover layer it is preferably made from a tear-resistant material to make sure that it may be removed entirely, even if gripping and pulling only at one end or corner thereof.

In some embodiments a single cover layer covers the entire adhesive layer, but is also possible to provide two or more separate cover layers and/or to provide one or more cover layers with weakening zones allowing only a part of it to be pulled off while leaving another part on the adhesive layer. The use of separate or separable cover layers may for example be advantageous if the adhesive layer is not continuous or if, in some installation situations, part of the adhesive layer is not needed. The separate or separable cover layers then allows the different sections of the adhesive layer to be uncovered independently.

In a second aspect of the invention the object of making it easier to install the skirt element without damaging it is achieved by a method according to claim 5, which comprises in particular the following sequence of steps:
the skirt element is arranged with the first edge at the roof window,
the second edge is arranged adjacent the exterior roof surface,
a cover layer on the adhesive layer visible from the exterior side of the skirt member in a state of delivery, is pulled off the skirt element, and
the skirt member is pressed against the exterior roof surface, so that the adhesive layer is forced into contact with the exterior roof surface.

To prevent damages to the skirt member, the second edge preferably arranged at a distance of no less than 50 mm from the exterior roof surface when the cover layer is pulled off. This not only prevents unnecessary deformation of the skirt element, but also keeps the adhesive layer well protected.

In some embodiments, the pull on the cover layer is in a direction substantially in parallel with the second edge of the skirt member, but particularly if using a folded cover layer, the pull on the cover layer may also be in a direction substantially in parallel with the plane of the skirt member and away from the first edge. Pulling in parallel with the plane of the skirt member allows the cover layer to be peeled off, while keeping the adhesive layer very close to the exterior roof surface and thus further obviating the need to lift the skirt member away from the roofing. It is noted that these directions of pull are only intended as overall directions. As an example it will also be necessary to pull slightly in parallel with the plane of the skirt member when pulling in a direction along the second edge of the skirt member, at least in the initial phase of the pull, in order to loosen the edge of the cover layer located furthest from the second edge of the skirt member.

In some installation situations, for example if mounting several roof windows side by side or mounting a roof penetrating structure close to another structure interrupting the roof surface or close to an edge of the roof, it may be advantageous to keep a part of the adhesive layer covered temporarily or permanently. In such cases it may be advantageous that two or more cover layers are pulled off separately and/or that weakening zones in one or more cover layers are broken before or during the pulling off of a part of the cover layer, leaving another part of the cover layer on the adhesive layer.

It is noted that any of the skirt elements described above with reference to the first aspect of the invention may be employed in the method according to the second aspect and vice versa.

In the following the invention will be described in more detail with reference to non-limiting embodiments shown in the drawing, where:
Fig. 1 shows a perspective cross-sectional view of the lower left corner of the frame of a roof window mounted in a roof structure and during installation of a skirt element according to an embodiment of the invention,
Fig. 2 shows a cross-section of a skirt member, which may form part of a skirt element according to the invention,
Fig. 3 is a cross-sectional view of the lower part of the frame of a roof window mounted in a roof structure and showing the installation of a skirt element according to an embodiment of the invention,
Fig. 4 is a perspective cross-sectional view of the left side of a skirt element according to an embodiment of the invention,
Fig. 5 corresponds to Fig. 4, but showing another embodiment of a skirt element,
Fig. 6 corresponds to Fig. 2, but showing another embodiment of a skirt member,
Fig. 7 corresponds to Fig 4 and 5, but showing another embodiment of a skirt element,
Fig. 8 corresponds to Figs 2 and 6, but showing another embodiment of a skirt member, and
Fig. 9 corresponds to Figs 2, 6 and 8, but showing still another embodiment of a skirt member.

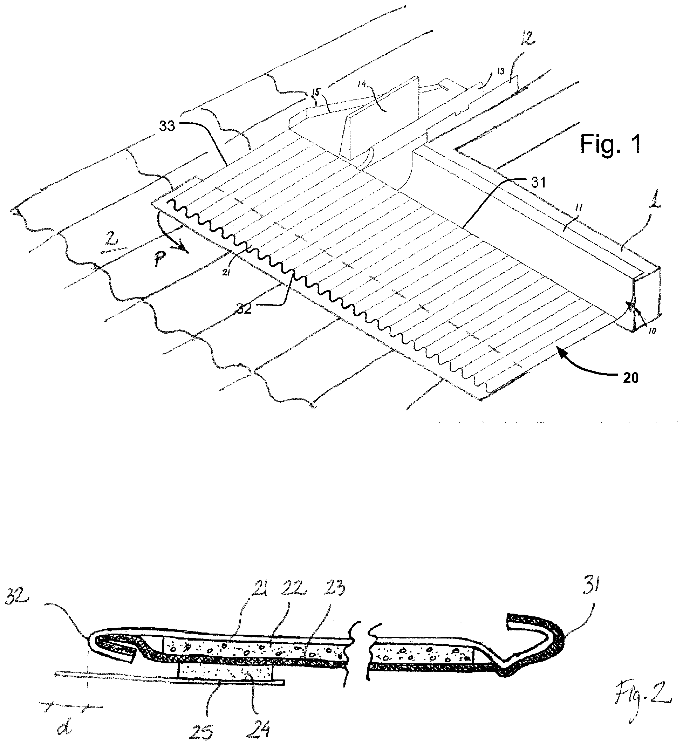

A skirt element according to an embodiment of the invention is shown in Fig. 1, where the right-hand side of the skirt element, which is identical to the left-hand side except for being mirror-inverted, has been cut off for clarity. The skirt element includes a rail member 10 arranged at the frame 1 of a roof window and intended for being connected there to, for example using screws, and a skirt member 20 arranged against an exterior roof surface 2, here shown as tiles.

The rail member 10, which comprises a number of sub-members 11, 12, 13, 14, 15 intended for being connected to the window and/or roof in a manner known per se, is attached to the skirt member 20 along a first edge 31 thereof.

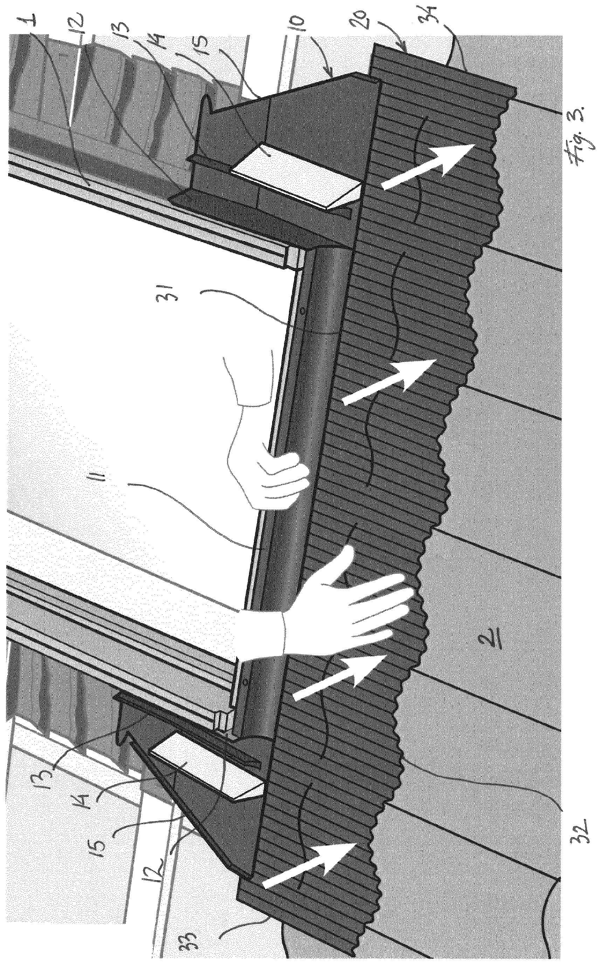

In this embodiment the skirt member 20 is corrugated to provide a surplus of material in a direction along its first edge 31 and a second edge 32, which is substantially parallel to the first edge. This surplus of material allows the skirt member to be shaped to follow the shape of undulated tiles as shown in Fig. 3 or like non-planar roofing materials. In other embodiments, where the skirt element is to be used on other roofing materials providing a more flat exterior roof surface, the skirt member too may be flat, but it will be understood that a skirt member with a surplus of material may also be used on a flat roof surface.

The skirt member 20 may be embodied as a laminated structure as shown in cross section in Fig. 2. Here the laminated structure includes an exterior layer 21 made from a weather resistant material, a core layer 22, and an interior layer 23 covering the interior side of the core layer. Furthermore, an adhesive layer 24 is provided on the interior side of the interior layer 23 and intended for adhering to the exterior surface 2 of the roof. In the state of delivery the adhesive layer 24 is protected by a cover layer 25 adhering there to. The edges of the cover layer, which are not visible in Fig. 1, are indicated by broken lines.

Usually, the core layer 22 has adhering properties allowing it to interconnect the exterior layer 21 and the interior layer 23, and it is usually of a material with a relatively high density and low elasticity so that the properties of the skirt member resembles those of a lead skirt member.

In Figs 1 and 2 the cover layer 25 is shown as projecting a distance d from the second edge 32 of the skirt member, which is also the second edge of the skirt element as such, and in Fig. 1 it is further shown to project from the end edges 33 of the skirt member. These projections are visible even when the skirt member is arranged closely against a roof surface. This has the advantage that the person installing the skirt element is not likely to forget to remove the cover layer, so that the adhesive layer becomes exposed and can be brought into contact with the exterior roof surface. Moreover, he will easily get a hold of the cover layer, even when wearing gloves, and will therefore not have to lift or bend the skirt member 20 in order to get a hold and remove the cover layer.

Though the cover layer 25 is shown only to project from one end edge 33 of the skirt member in Fig. 1 it is to be understood that it may also project from the other end edge 34, which is shown only in Fig. 3, but it equally to possible to have a projection only at one end. Similar considerations apply to the other embodiments, where only the left-hand sides of the skirt elements are shown in the drawing.

When installing the skirt element, the person performing the task will pull on the cover layer 25 as indicated by the arrow P in Fig. 1 to remove the cover layer, and then press the skirt member 20 down into close contact with the exterior surface 2 of the roofing material as shown by the arrows in Fig. 3. This will usually be done by hand as also illustrated in Fig. 3 to avoid damages to the roof material, but tools such as a rubber mallet may also be employed. It is noted that Fig. 3 shows an entire skirt element, where no parts have been cut off, and that all of the rail members and skirt members described herein with reference to any figure of the drawing may be embodied as in Fig. 3 though illustrated only by the left-hand side.

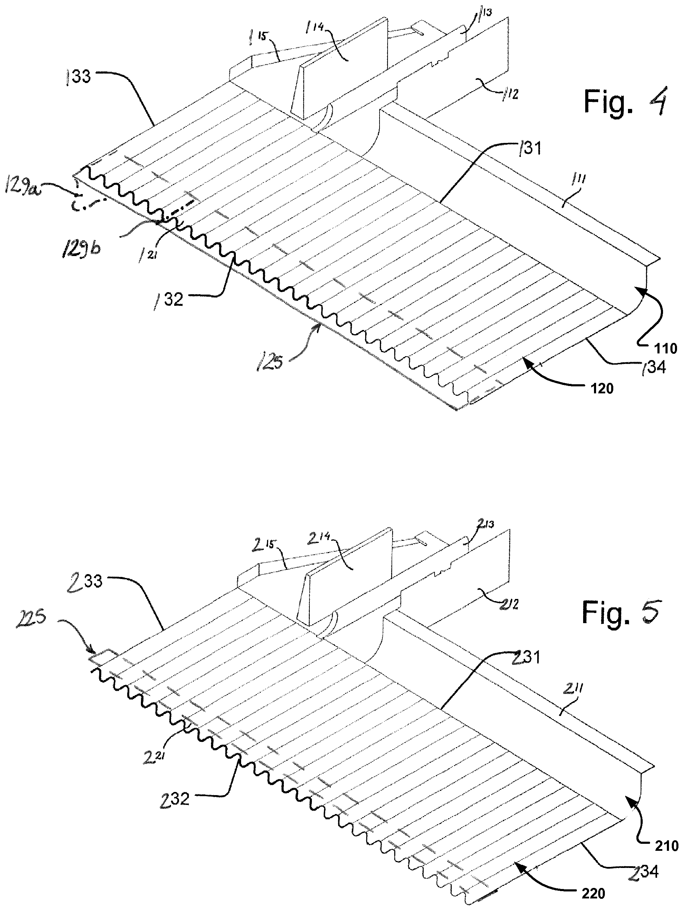

Though the same reference number are used in Figs 1-3, the skirt member 20 in Fig. 1 may be embodied in a different way than in Fig. 2 and the cover layer 25 in Fig. 2 need not project from the end edges 33 as in Fig. 1. Instead the cover layer may project only from the second edge as shown in Fig. 4. The embodiment in Fig. 4 has the advantage in comparison to that in Fig. 1 that material consumption is minimized while providing virtually the same ease of installation. Moreover, the parts of the cover layer projecting from the end edges in Fig. 1 may be in the way in some installation and/or packing situations. On the other hand, there is less material visible to and possible grip for the person, who is intended to remove the cover layer and the projections at the end edges are by some perceived as a good place to grip the cover layer when having to pull it off.

In Fig. 4 similar elements has been given the same numbers as in Figs 1-3 but with 100 added. When nothing else is stated it is to be understood that these elements have the same function and/or structure in both embodiments.

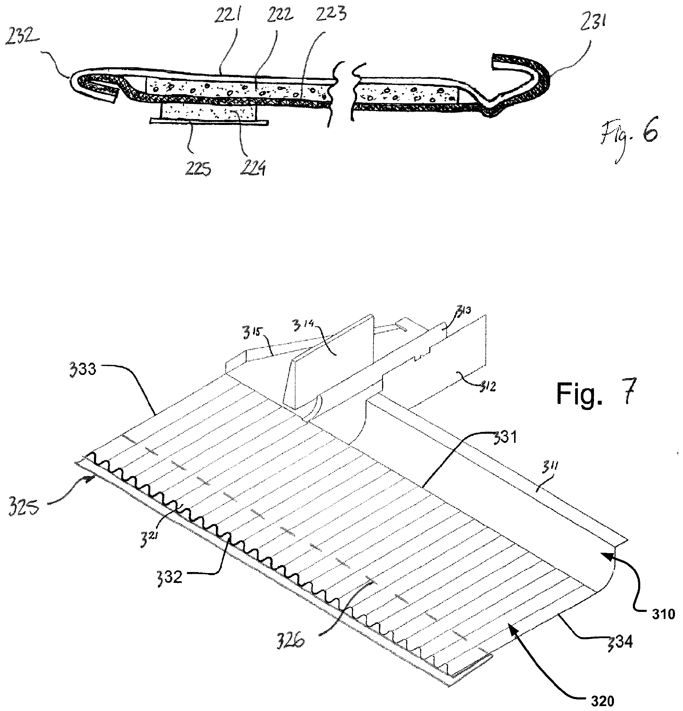

Still another embodiment is shown in Figs 5 and 6, where 200 has been added to the references numbers used in Figs 1 and 2 and here too it is to be understood that these elements have the same function and/or structure unless otherwise stated. In this embodiment, the cover layer 225 does not project from the second edge 232 of the skirt member, but only from the end edges 233, only the left being shown. This means that even less material is needed for the cover layer, but as the amount of material visible to the person intended to remove the cover layer is also smaller, the cover layer has a colour, which is easily distinguished from the colour of the roofing material and the colour of the skirt element itself. A contrasting or very bright colour is presently preferred, and it is also possible to print instructions, such as the message "Remember to remove this strip", on the visible part of the cover layer. The use of colours and printed messages will be advantageous in all embodiments of the invention, but is of particular importance in embodiments, where only relatively small sections of the cover layer are visible.

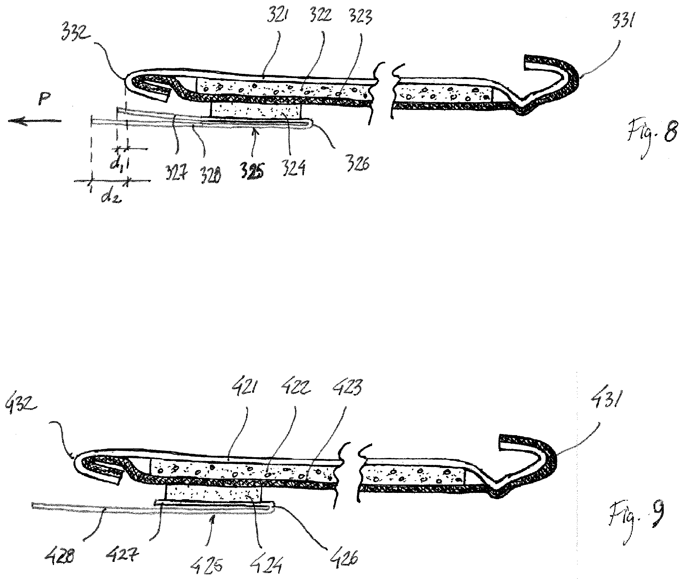

Still another embodiment is shown in Figs 7 and 8, where 300 has been added to the references numbers used in Figs 1 and 2 and where elements bearing similar numbers are again to be understood as having the same function and/or structure unless otherwise stated. In this embodiment the cover layer 325 is a strip of material, which is folded in its length direction and arranged with the fold line 326 extending in parallel with the second edge 332. The fold line 326 is arranged on the interior side of the skirt member 320 so that the two edges of the cover layer opposite the fold line are located near the second edge 332 of the skirt element. In the embodiment shown, the first section 327 of the cover layer attached to the adhesive layer 324 is somewhat smaller than the second section 328 on the other side of the fold line 326, so that the edge of the second section is located further from the second edge 332 of the skirt member 320 than the edge of the first section. This means that it will be relatively easy to get a hold of only the second section 328 and then pull on the cover layer 325 in a direction substantially in parallel with the plane of the skirt element, away from the first edge 331, thereby gradually peeling the cover layer off the adhesive layer. This allows for a very reliable and gentle removal of the cover layer, which can be performed without lifting the skirt member from its intended position on the roof surface and which may even be performed after the skirt member has been deformed to fit the shape of the roofing material.

The relationship between the width of the cover layer 325 and the position of the fold line 326, i.e. the relationship between the width d1 of the projecting part of the first section 327 and the width d2 of the projecting part of the second section 328 of the cover layer, may vary and the optimal relationship may be determined by simple experiments. It is even possible to make the first section so small that it is not visible from the exterior side as illustrated by the embodiment in Fig. 9, where 100 has been added to the reference numbers in Fig. 8 and where all elements have the same function and/or structure in both embodiments unless otherwise stated. At present it is considered advantageous that the first section 327 is visible from the exterior side, since it will serve as an indication that the strip can be peeled off in a direction away from the first edge 331 instead of along the second edge as in Fig. 1. On the other hand the embodiment in Fig. 9 ensures that the pull is on the correct section of the cover layer.

In Fig. 7 the cover layer 325 is shown with virtually no projection from the end edges 333, 334 of the skirt member since it is the intention that the person installing the skirt element should pull on the part projecting from the second edge 332, but it is of course possible to have projections at the end edges both in this embodiment and in the one in Fig. 9.

Though the window frame 1 and roof surface 2 are not shown in Figs 4, 5 and 7 it is to be understood in the mounted state this skirt element will be located in a similar manner in relation to these as in Fig. 1.

In all of the embodiments shown in the drawing and described above the cover layers 25, 125, 225, 325, 425 have been shown as made from rectangular pieces of material, but it will be understood that this need not be the case.

As an example, a projecting part of the cover layer may be provided with a tab 129a as shown in dash-dotted line Fig. 4 to make it easy for the person installing the skirt element to get a hold of the cover layer. This tab may be provided with printed instructions and/or given a distinct colour as described above. The tab is shown to the left in Fig. 4, since a right handed person usually finds it to be easier to pull from the left to the right, but it is of course possible to place the tab elsewhere and/or to be provide more than one tab. Such tabs are most advantageous in embodiment with a non-folded cover layer as in Figs 1, 2, 4 and 5, but may found in all embodiments for providing a point where the cover layer can be easily gripped.

In some embodiments, the two or more separate cover layers may be provided, thereby allowing them to be removed one by one and/or to leave one or more in place. This may for example be advantageous if the skirt element is to be mounted in a non-standard situation, e.g. overlapping a neighbouring skirt element or if a section has to be removed to make room for other structures. In Fig. 4 the cover layer 125 is provided with a weakening zone 129b, which allows a separation of the cover into two separate parts. Such weakening zones may for example be in the form of perforations, indentations, sections with a reduced material thickness or sections of another weaker material and it is also possible to provide a tear-out strip, which will allow the material to be weakened if needed. It is, however, also possible to use cover layers, which are separate already in the state of delivery of the skirt element, or to provide an indication of where to cut the material of the cover layer to separate it manually. One cover layer may be provided with several weakening zones 129b and tabs 129a may be provided on both sides of a weakening zone to facilitate division of the cover layer. Though described with reference only to Fig. 4 it should be understood that weakening zones and tabs may be employed in all embodiments of the invention.

In another embodiment (not shown), the cover layer may be provided with a weakening zone or an interruption extending in parallel with the second edge 132, so that a strip-like section of the cover layer closest to the second edge may be pulled off while leaving a section closer to the first edge 131 on the adhesive layer. The strip-like section would correspond to the cover layers shown in Figs 1, 2, 4 and 5. This embodiment of the cover layer may be used with any embodiment of the adhesive layer, but the section of the cover layer left on the skirt member should of course be attached to the skirt member even after removal of the section closest to the second edge.

In Figs 2, 6, 8 and 9 the exterior layers 21, 221, 321, 421 and interior layers 23, 223, 323, 423 define the extent of the skirt member 20, 220, 320, 420, whereas the width of the core layer 22, 222, 322, 422 is smaller, and the core layer is isolated from the exterior by the outer edges of the exterior and interior layers being bent. This is to provide good contact between the interior and exterior layers and provide a very durable skirt element, but it should be understood that the exact formation of the skirt member is not limiting the scope of the present invention.

The bent edges at the first edge 31, 231, 331, 431 of the skirt member may be used for interconnection with a rail element 11, 111, 211, 311, 411. The rail element is then preferably provided with a similar bent edge and once the bend edges of the skirt and rail elements are in engagement, the joint is compressed and/or glued or welded to form a permanent connection.

The bent edges at the second edge 32, 232, 332, 432 of the skirt member are bent sharply inwards and upwards to form a waterproof closure of the skirt member. This means that the joint is protected from the weather and that the exterior surface of the skirt element is smooth and uninterrupted hence providing optimal water draining properties.

The adhesive layer 24, 224, 324, 424 is a strip of material having a width of 2-5 cm and extending over the entire length of the skirt member 20, 220, 320, 420 and is only found on the part of the skirt member closest to the second edge 32, 232, 332, 432, which is overlapping the roofing material. The part of the skirt member closest to the first edge 31, 231, 331, 431 is intended not to be in contact with the roofing material, but to span a gap between the window frame and the roofing material occupied by insulation material.

It is also possible to provide the adhesive layer 24, 224, 324, 424 as two or more strips of material running substantially in parallel, as dots or in any other appropriate non-continuous pattern. The cover layer 25, 125, 225, 325, 425 may then be one continuous sheet of material or two or more separate strips or pieces as described above, corresponding to the pattern of the adhesive material.

Though not visible in the drawing it is to be understood that all layers of the skirt member, except possibly for the cover layer, have substantially the same length when seen in parallel to the first and second edges 31, 131, 231, 331, 431; 32, 132, 232, 332, 432. However, the end edges 33, 34, 133, 233, 333, 433 may be bent in the same way as shown on the edge in Figs 2, 6, 8 and 9 to provide a water-proof and durable closure of the ends of the skirt member. To facilitate this, the core layer may be slightly shorter than the exterior and interior layers.

In any of the embodiments described above, the exterior layer 21, 121, 221, 321, 421 of the skirt member may for example be made from sheet aluminium with a thickness of 0,15 mm, which has been lacquered,
The interior layer 23, 223, 323, 423 may be a cross-laminated foil of a polyolefin, preferable polyethylene, such as the one sold under the trademark Valeron® and with a thickness of 0,075 mm. Regardless what material is used, it must be resistant to contact with the materials used in the adhesive layer and in the core layer as well as with the roofing material. Moreover, as the skirt element will be subject to large temperature variations, the interior layer must be able to follow the thermal expansions of the other materials of the skirt element and vice versa.

A polymer is used for the interior layer and it is presently preferred that the sheet is at least 0,075 mm thick, has a tensile strength of at least 40 MPa, a tearing strength of at least 55 N and displays an elongation at break of at least 150 % and shrinkage of no more than 3%.

The cover layer is preferably made from a polymer, such as polypropylene or polyethylene, or silicone coated paper. One example of a cover layer is a silicone-coated polyethylene foil with a bright red colour, which makes it easily discernible from the exterior layer, which is usually of a dark grey colour. Regardless what material is used, it must be resistant to contact with the materials used in the adhesive layer, and is preferably provided with a release agent to make sure that the cover layer can be easily pulled off when needed, but it should of course not fall off prematurely. It is presently preferred that the cover layer has a thickness of at least 0,030 mm, a tensile strength of at least 40 MPa, a tearing strength of at least 20 N and displays an elongation at break of at least 150 % and shrinkage of no more than 3%.

The core layer 22, 222, 322, 422 may be made as described in WO01/65029, i.e. from a carrier material admixed with a non-structural constituent, such as a metal compound having a density higher than 3.5 g/ml, preferably higher than 4.5 g/ml. The non-structural constituent may be particles and may be a pure metal, an oxidized metal, an alloy or bound in a chemical compound, such as in inorganic salt. It may be of a mineral, ceramic, metallic or polymeric nature, but metal-based compounds are preferred. Presently preferred materials are ferric oxide, which is usually readily available and cheap, and barium sulphate, which has excellent weather resistance properties. Other possible metals, which may form basis for the non-structural constituent, are silver, molybdenum and copper, which may be bound in a chloride, sulphate, sulphide, or nitrate salt. Further compounds not containing heavy metals, such as for example carbon black, may also be used. The non-structural constituent preferably constitutes more than 50 % by weight of the adhesive layer material, preferably 75% and still more preferred up to 95 %.

The carrier materials should of course be compatible with the non-structural constituent chosen. Polymeric materials, such as PVC or butyl rubber (styrene-butadiene radial block copolymer), and bitumen products are suitable for this purpose. Bitumen may be preferred is some aspects of the invention because it is sufficient tacky at ambient temperatures for allowing the lamination with a foil sheeting used as cover layer. When environmental considerations are important butyl rubber is advantageous. A butyl rubber material with high tackiness and which is suitable for use in the adhesive layer can be achieved by admixing carbon black and particulate barium sulphate. However, when making the material for the skirt element in a lamination process, the tackiness of butyl rubber and PVC may not sufficient for achieving a good adhesion to the cover layers.

Regardless what material is used, the core layer must be resistant to contact with the materials used in the exterior layer and the interior layer. Moreover, as the skirt element will be subject to larger temperature variations, the core layer must be able to follow the thermal expansions of the other materials of the skirt element and vice versa. It is presently preferred that the core layer material has a density of at least 2,6 g/ml, a solids content of at least 99,5 %, a calcined residue of at least 80 % and an adhesion of at least 30 N.

The adhesive layer may be made from the same material as the core layer, but as it will to some degree be exposed, it may need a better weather resistance. It may therefore be expedient, to leave out the metal particles and/or to add a stabilizer. Regardless what material is used, it must be resistant to contact with the materials used in the interior layer and the roofing material. It is presently preferred that the adhesive layer material has a density of at least 1,2 g/ml, an ash content of no more than 51 %, an adhesion of at least 25 N to tiles and concrete, and a peel strength (180°-Peel at 23°C and 200 mm/min in accordance with DIN EN ISO 8510-2) of at least 1,50 N/mm.

All of the materials used in the skirt element must be able to endure the climate on a roof surface and must therefore be resistant to moisture and preferably also UV radiation and all of the properties of the materials described above must be maintained over the entire lifetime of the skirt element, typically at least 20 years. The materials used in the cover layer may, however, be of a less durable nature, since the cover layer will usually be removed during installation, but as parts of it may be left on, it is preferred that even the cover layer is made from durable materials.

## Claims

1. A skirt element for use in a flashing for a roof window and comprising a skirt member (20, 120, 220, 320, 420) intended to rest on an exterior roof surface (2) formed by a roofing material, said skirt element having an interior side intended for facing the exterior roof surface (2) and an exterior side intended for facing the exterior in the mounted state, said skirt member comprising a first edge (31, 131, 231, 331, 431) intended to be arranged at the roof window, a second edge (32, 132, 232, 332, 442) opposite the first edge (31, 131, 231, 331, 431) and intended to rest on the exterior roof surface (2) and two end edges extending between the first (31, 131, 231, 331, 431) and second (32, 132, 232, 332, 442) edges, and comprising an adhesive layer (24, 124, 224, 324, 424) on the interior side of an interior layer (23, 123, 223, 323, 423) of the skirt member, and a cover layer (25, 125, 225, 325, 425) covering the adhesive layer (24, 124, 224, 324, 424) in a state of delivery of the skirt element,
wherein said interior layer (23, 123, 223, 323, 423) is a polymer, preferred is at least 0,075 mm thick, having a tensile strength of at least 40 MPa, a tearing strength of at least 55 N and displaying an elongation at break of at least 150 % and shrinkage of no more than 3%, wherein;
in the state of delivery of the skirt element, a part of the cover layer (25, 125, 225, 325, 425) is visible from the exterior side,
**characterized in**
**that** the cover layer (25, 125, 225, 325, 425) is of different colour than the exterior side of the skirt member (20, 120, 220, 320, 420), said colour of the cover layer (25, 125, 225, 325, 425) being a bright colour, such as white, red, yellow, green or blue, and
in that the cover layer (25, 125, 225, 325, 425) extends at least 3 mm from the second edge (32, 132, 232, 332, 432) away from the first edge (31, 131, 231, 331, 431) and/or from one or both end edges (33, 34, 133, 134, 233, 234, 333, 334) away from the opposite end edge, and
in that the adhesive layer (24, 124, 224, 324, 424) is a strip of material having a width of 2-5 cm and extending over the entire length of the skirt member (20, 120, 220, 320, 420) and is only found on the part of the skirt member closest to the second edge (32, 132, 232, 332, 432), which is intended to be overlapping a roofing material in the mounted state, and wherein the part of the skirt member (20, 120, 220 ,320, 420) closest to the first edge (31, 131, 231, 331, 431) is intended, in the mounted state, not to be in contact with the roofing material, but to span a gap between a window frame of the roof window and the roofing material occupied by insulation material.

2. A skirt element according to claim 1, where the cover layer (325) is folded along a fold line (326), thereby defining two sections (327, 328) of the material on opposite sides of the fold line (326), and arranged with the fold line (326) extending on the interior side of the skirt element substantially in parallel with the second edge (332) of the skirt member (320) and at least one of the two sections of the cover layer (325) being visible from the exterior side.

3. A skirt element according to any of the preceding claims, where the cover layer (25, 125, 225, 325, 425) is made from a tear-resistant material.

4. A skirt element according to any of the preceding claims, where two or more separate cover layers are provided and/or where one or more cover layers are provided with weakening zones (129B) allowing only a part of it to be pulled off while leaving another part on the adhesive layer.

5. A method for installation of a skirt element according to claim 1 at a roof window, where a skirt member (20, 120, 220, 320, 420) of the skirt element is arranged to rest with an interior side against an exterior roof surface (2) formed by a roofing material and an exterior side of the skirt element facing the exterior, where a first edge (31, 131, 231, 331, 431) of the skirt member (20, 120, 220, 320, 420) is arranged at the roof penetrating structure, so that a second edge (32, 132, 232, 332, 432) opposite the first edge (31, 131, 231, 331, 431) comes to rest on the exterior roof surface (2) and two end edges extends between the first and second edges, and where an adhesive layer (24, 124, 224, 324, 424) on an interior side of an interior layer (23, 123, 223, 333, 433) is used for connecting the skirt element to the exterior roof surface (2),
**characterized in** the following sequence of steps:
the skirt element is arranged with the first edge (31, 131, 231, 331, 431) at the roof window,
the second edge (32, 132, 232, 332, 432) is arranged adjacent the exterior roof surface (2), so that the part of the skirt member (20, 120, 220, 320, 420) closest to the first edge (31, 131, 231, 331, 431) is not in contact with the roofing material, but spanning a gap between a window frame of the roof window and the roofing material occupied by insulation material,
a cover layer (25, 125, 225, 235, 425) on the adhesive layer (24, 124, 224, 324, 424), which is visible from the exterior side of the skirt member (20, 120, 220, 320, 420) in a state of delivery having a different colour than the exterior side of the skirt member (20, 120, 220, 320, 420), said colour of the cover layer (25, 125, 225, 325, 425) being a bright colour, such as white, red, yellow, green or blue, is pulled off the skirt element, and
the skirt member (20, 120, 220, 320, 420) is pressed against the exterior roof surface (2), so that the adhesive layer (24, 124, 224, 324, 424) is forced into contact with the exterior roof surface (2).

6. A method according to claim 5, where the second edge (32, 132, 232, 332, 432) is arranged at a distance of no less than 50 mm from the exterior roof surface (2) when the cover layer (25, 125, 225, 325, 425) is pulled off.

7. A method according to claim 5 or 6, where the pull on the cover layer (25, 125, 225) is in a direction substantially in parallel with the second edge (32, 132, 232) of the skirt member (20, 120, 220).

8. A method according to claim 5 or 6, where the pull on the cover layer (325, 425) is in a direction substantially in parallel with the plane of the skirt member (320, 420) and away from the first edge (331, 431).

9. A method according to any of claims 5-8, where two or more cover layers (25, 125, 225, 325, 425) are pulled off separately and/or where weakening zones in one or more cover layers (25, 125, 225, 325, 425) are broken before or during the pulling off of a part of the cover layer (25, 125, 225, 325, 425), leaving another part of the cover layer (25, 125, 225, 325, 425) on the adhesive layer (24, 124, 224, 324, 424).

## Patentansprüche

1. Schürzenelement zur Verwendung in einem Eindeckung für ein Dachfenster, umfassend ein Schürzenteil (20, 120, 220, 320, 420), das dazu vorgesehen ist, auf einer äußeren Dachoberfläche (2) aufzuliegen, die von einem Überdachungsmaterial ausgebildet ist, wobei das Schürzenelement eine Innenseite aufweist, die dazu vorgesehen ist, der äußeren Dachoberfläche (2) zugewandt zu sein, und eine Außenseite, die dazu vorgesehen ist, in montiertem Zustand dem Äußeren zugewandt zu sein, wobei das Schürzenteil eine erste Kante (31, 131, 231, 331, 431) umfasst, dazu vorgesehen, an dem Dachfenster angeordnet zu sein, eine zweite Kante (32, 132, 232, 332, 432) gegenüber der ersten Kante (31, 131, 231, 331, 431) und dazu vorgesehen, auf der äußeren Dachoberfläche (2) aufzuliegen, und zwei Abschlusskanten die sich zwischen der ersten (31, 131, 231, 331, 431) und zweiten (32, 132, 232, 332, 432) Kante erstrecken, und umfassend eine adhäsive Schicht (24, 124, 224, 324, 424) auf der Innenseite einer Innenschicht (23, 123, 223, 323, 423) des Schürzenteils, und eine Abdeckschicht (25, 125, 225, 325, 425), welche die adhäsive Schicht (24, 124, 224, 324, 424) in einem Lieferzustand des Schürzenelements abdeckt, wobei
die Innenschicht (23, 123, 223, 323, 423) ein Polymer ist, bevorzugt mindestens 0,075 mm dick ist, eine Zugfestigkeit von mindestens 40 MPa, eine Reißfestigkeit von mindestens 55 N aufweist und eine Bruchdehnung von mindestens 150 % und eine Schrumpfung von höchstens 3 % zeigt, wobei im Lieferzustand des Schürzenelements ein Teil der Abdeckschicht (25, 125, 225, 325, 425) von der Außenseite sichtbar ist, und
**dadurch gekennzeichnet, dass**
die Abdeckschicht (25, 125, 225, 325, 425) von anderer Farbe als die Außenseite des Schürzenteils (20, 120, 220, 320, 420) ist, wobei die Farbe der Abdeckschicht (25, 125, 225, 325, 425) eine helle Farbe ist, wie etwa Weiß, Rot, Gelb, Grün oder Blau, und
dadurch, dass sich die Abdeckschicht (25, 125, 225, 325, 425) mindestens 3 mm von der zweiten Kante (32, 132, 232, 332, 432) weg von der ersten Kante (31, 131, 231, 331, 431) und/oder von einer oder beiden Abschlusskanten (33, 34, 133, 134, 233, 234, 333, 334) weg von der gegenüberliegenden Abschlusskante erstreckt, und dadurch, dass die adhäsive Schicht (24, 124, 224, 324, 424) ein Streifen von Material mit einer Breite von 2-5 cm ist und sich über die gesamte Länge des Schürzenteils (20, 120, 220, 320, 420) erstreckt und nur an dem Teil des Schürzenteils zu finden ist, der sich am dichtesten an der zweiten Kante (32, 132, 232, 332, 432) befindet, die dazu vorgesehen ist, das Überdachungsmaterial in dem montierten Zustand zu überlappen, und wobei der Teil des Schürzenteils (20, 120, 220, 320, 420), der sich am dichtesten an der ersten Kante (31, 131, 231, 331, 431) befindet, dazu vorgesehen ist, in montiertem Zustand nicht in Kontakt mit dem Überdachungsmaterial zu sein, sondern eine Lücke zwischen einem Fensterrahmen des Dachfensters und dem Überdachungsmaterial, belegt von Isolationsmaterial, zu überspannen.

2. Schürzenelement nach Anspruch 1, wobei die Abdeckschicht (325) entlang einer Faltungslinie (326) gefaltet ist, dabei zwei Abschnitte (327, 328) des Materials auf gegenüberliegenden Seiten der Faltungslinie (326) definierend, und so angeordnet, dass sich die Faltungslinie (326) auf der Innenseite des Schürzenelements im Wesentlichen parallel mit der zweiten Kante (332) des Schürzenteils (320) erstreckt und mindestens einer der zwei Abschnitte der Abdeckschicht (325) von der Außenseite sichtbar ist.

3. Schürzenelement nach einem der vorangehenden Ansprüche, wobei die Abdeckschicht (25, 125, 225, 325, 425) aus einem verschleißbeständigen Material hergestellt ist.

4. Schürzenelement nach einem der vorangehenden Ansprüche, wobei zwei oder mehr separate Abdeckschichten bereitgestellt sind und/oder wobei eine oder mehr Abdeckschichten mit Schwächungszonen (129B) bereitgestellt sind, die nur einem Teil davon gestatten, abgezogen zu werden, während der andere Teil an der adhäsiven Schicht verbleibt.

5. Verfahren zur Installation eines Schürzenelements nach Anspruch 1 an einem Dachfenster, wobei ein Schürzenteil (20, 120, 220, 320, 420) des Schürzenelements so angeordnet ist, dass es mit einer Innenseite auf einer äußeren Dachoberfläche (2) aufliegt, die von einem Überdachungsmaterial ausgebildet ist, und eine Außenseite des Schürzenelements dem Äußeren zugewandt ist, wo eine erste Kante (31, 131, 231, 331, 431) des Schürzenelements (20, 120, 220, 320, 420) an der Dachpenetrierungsstruktur angeordnet ist, sodass eine zweite Kante (32, 132, 232, 332, 432) gegenüber der ersten Kante (31, 131, 231, 331, 431) auf der äußeren Dachoberfläche (2) zur Ablage kommt und sich zwischen der ersten und zweiten Kante zwei Abschlusskanten erstrecken, und wobei eine adhäsive Schicht (24, 124, 224, 324, 424) auf einer Innenseite einer Innenschicht (23, 123, 223, 323, 423) verwendet wird, um das Schürzenelement mit der äußeren Dachoberfläche (2) zu verbinden,
**gekennzeichnet durch** die folgende Sequenz von Schritten:
das Schürzenelement wird mit der ersten Kante (31, 131, 231, 331, 431) an dem Dachfenster angeordnet,
die zweite Kante (32, 132, 232, 332, 432) wird der äußeren Dachoberfläche (2) benachbart angeordnet, sodass der am dichtesten an der ersten Kante (31, 131, 231, 331, 431) befindliche Teil des Schürzenelements (20, 120, 220, 320, 420) nicht im Kontakt mit dem Überdachungsmaterial ist, sondern eine Lücke zwischen einem Fensterrahmen des Dachfensters und dem von Isolationsmaterial belegten Überdachungsmaterial überspannt,
eine Abdeckschicht (25, 125, 225, 325, 425) an der adhäsiven Schicht (24, 124, 224, 324, 424), die von der Außenseite des Schürzenelements (20, 120, 220, 320, 420) sichtbar ist, in einem Lieferzustand eine andere Farbe als die Außenseite des Schürzenteils (20, 120, 220, 320, 420) aufweisend, wobei die Farbe der Abdeckschicht (25, 125, 225, 325, 425) eine helle Farbe ist, wie etwa Weiß, Rot, Gelb, Grün oder Blau, von dem Schürzenelement abgezogen wird, und
das Schürzenteil (20, 120, 220, 320, 420) gegen die äußere Dachoberfläche (2) gedrückt wird, sodass die adhäsive Schicht (24, 124, 224, 324, 424) in Kontakt mit der äußeren Dachoberfläche (2) gedrückt wird.

6. Verfahren nach Anspruch 5, wobei die zweite Kante (32, 132, 232, 332, 432) in einem Abstand von nicht weniger als 50 mm von der äußeren Dachoberfläche (2) angeordnet ist, wenn die Abdeckschicht (25, 125, 225, 325, 425) abgezogen ist.

7. Verfahren nach Anspruch 5 oder 6, wobei das Ziehen an der Abdeckschicht (25, 125, 225) in einer Richtung im Wesentlichen parallel zu der zweiten Kante (32, 132, 232) des Schürzenteils (20, 120, 220) erfolgt.

8. Verfahren nach Anspruch 5 oder 6, wobei das Ziehen an der Abdeckschicht (325, 425) in einer Richtung im Wesentlichen parallel zu der Ebene des Schürzenteils (320, 420) und weg von der ersten Kante (331, 431) erfolgt.

9. Verfahren nach einem der Ansprüche 5-8, wobei die zwei oder mehr Abdeckschichten (25, 125, 225, 325, 425) separat abgezogen werden und/oder wobei Schwächungszonen in einer oder mehreren Abdeckschichten (25, 125, 225, 325, 425) vor oder während des Abziehens eines Teils der Abdeckschicht (25, 125, 225, 325, 425) gebrochen werden, wobei der andere Teil der Abdeckschicht (25, 125, 225, 325, 425) auf der adhäsiven Schicht (24, 124, 224, 324, 424) verbleibt.

## Revendications

1. Élément de jupe destiné à être utilisé dans un raccordement pour une fenêtre de toit et comprenant un organe de jupe (20, 120, 220, 320, 420) destiné à reposer sur une surface de toit extérieure (2) formée par un matériau de toiture,
ledit élément de jupe ayant un côté intérieur destiné à faire face à la surface de toit extérieure (2) et un côté extérieur destiné à faire face à l'extérieur à l'état monté,
ledit organe de jupe comprenant un premier bord (31, 131, 231, 331, 431) destiné à être disposé au niveau de la fenêtre de toit, un second bord (32, 132, 232, 332, 432) opposé au premier bord (31, 131, 231, 331, 431) et destiné à reposer sur la surface de toit extérieure (2) et deux bords terminaux s'étendant entre les premier (31, 131, 231, 331, 431) et second (32, 132, 232, 332, 432) bords, et comprenant :
une couche adhésive (24, 124, 224, 324, 424) sur le côté intérieur d'une couche intérieure (23, 123, 223, 323, 423) de l'organe de jupe, et
une couche de couverture (25, 125, 225, 325, 425) recouvrant la couche adhésive (24, 124, 224, 324, 424) dans un état de livraison de l'élément de jupe,
ladite couche intérieure (23, 123, 223, 323, 423) étant un polymère, de préférence d'au moins 0,075 mm d'épaisseur, ayant une résistance à la traction d'au moins 40 MPa, une résistance à la déchirure d'au moins 55 N et présentant un allongement à la rupture d'au moins 150% et un rétrécissement n'excédant pas 3%,
dans lequel, dans l'état de livraison de l'élément de jupe, une partie de la couche de couverture (25, 125, 225, 325, 425) est visible du côté extérieur,
et **caractérisé en ce que** la couche de couverture (25, 125, 225, 325, 425) est de couleur différente du côté extérieur de l'organe de jupe (20, 120, 220, 320, 420), ladite couleur de la couche de couverture (25, 125, 225, 325, 425) étant une couleur vive, comme le blanc, rouge, jaune, vert ou bleu, et
**en ce que** la couche de couverture (25, 125, 225, 325, 425) s'étend d'au moins 3 mm du second bord (32, 132, 232, 332, 432) à l'opposé du premier bord (31, 131, 231, 331, 431) et/ou d'un ou deux bords terminaux (33, 34, 133, 134, 233, 234, 333, 334) à l'opposé du bord terminal opposé, et
**en ce que** la couche adhésive (24, 124, 224, 324, 424) est une bande de matériau ayant une largeur de 2 à 5 cm et s'étendant sur toute la longueur de l'organe de jupe (20, 120, 220, 320, 420) et ne se trouve que sur la partie de l'élément de jupe la plus proche du second bord (32, 132, 232, 332, 432) qui, à l'état monté, est destinée à recouvrir le matériau de toiture et
dans lequel la partie de l'organe de jupe (20, 120, 220, 320, 420) la plus proche du premier bord (31, 131, 231, 331, 431) est destinée, à l'état monté, à ne pas être en contact avec le matériau de toiture, mais à couvrir un espace entre un cadre de fenêtre de la fenêtre de toit et le matériau de toiture occupé par un matériau isolant.

2. Élément de jupe selon la revendication 1, dans lequel la couche de couverture (325) est pliée le long d'une ligne de pliage (326), définissant ainsi deux sections (327, 328) du matériau sur des côtés opposés de la ligne de pliage (326), et disposée avec la ligne de pliage (326) s'étendant sur le côté intérieur de l'élément de jupe sensiblement parallèlement au second bord (332) de l'organe membre de jupe (320) et au moins l'une des deux sections de la couche de couverture (325) étant visible depuis le côté extérieur.

3. Élément de jupe selon l'une quelconque des revendications précédentes, dans lequel la couche de couverture (25, 125, 225, 325, 425) est réalisée en un matériau résistant au déchirement.

4. Élément de jupe selon l'une quelconque des revendications précédentes, dans lequel deux ou plusieurs couches de couverture séparées sont prévues et/ou dans lequel une ou plusieurs couches de couverture sont pourvues de zones d'affaiblissement (129B) permettant d'en retirer seulement une partie en laissant une autre partie sur la couche adhésive.

5. Procédé d'installation d'un élément de jupe selon la revendication 1 sur une fenêtre de toit, dans lequel un organe de jupe (20, 120, 220, 320, 420) de l'élément de jupe est agencé pour reposer avec un côté intérieur contre une surface de toit extérieure (2) formée par un matériau de toiture et un côté extérieur de l'élément de jupe tourné vers l'extérieur, où un premier bord (31, 131, 231, 331, 431) de l'organe de jupe (20, 120, 220, 320, 420) est disposé sur la structure de pénétration de toit, de sorte qu'un second bord (32, 132, 232, 332, 432) opposé au premier bord (31, 131, 231, 331, 431) s'appuie sur la surface de toit extérieure (2) et que deux bords terminaux s'étendent entre les premier et second bords, une couche adhésive (24, 124, 224, 324, 424) sur un côté intérieur d'une couche intérieure (23, 123, 223, 323, 423) étant utilisée pour relier l'élément de jupe à la surface de toit extérieure (2),
**caractérisé par** la séquence d'étapes suivante:
l'élément de jupe est disposé avec le premier bord (31, 131, 231, 331, 431) sur la fenêtre de toit,
le second bord (32, 132, 232, 332, 432) est disposé de manière adjacente à la surface de toit extérieure (2), de sorte que la partie de l'élément de jupe (20, 120, 220, 320, 420) la plus proche du premier bord (31, 131, 231, 331, 431) ne soit pas en contact avec le matériau de toiture mais couvre un espace entre un cadre de fenêtre de la fenêtre de toit et le matériau de toiture occupé par le matériau isolant,
une couche de couverture (25, 125, 225, 325, 425) sur la couche adhésive (24, 124, 224, 324, 424), qui est visible du côté extérieur de l'élément de jupe (20, 120, 220, 320, 420) dans un état de livraison ayant une couleur différente du côté extérieur de l'organe de jupe (20, 120, 220, 320, 420), ladite couleur de la couche de couverture (25, 125, 225, 325, 425) étant une couleur vive telle que le blanc, rouge, jaune, vert ou bleu, est retirée de l'élément de jupe, et
l'élément de jupe (20, 120, 220, 320, 420) est pressé contre la surface de toit extérieure (2), de sorte que la couche adhésive (24, 124, 224, 324, 424) est forcée en contact avec la surface de toit extérieure (2).

6. Procédé selon la revendication 5, dans lequel le second bord (32, 132, 232, 332, 432) est disposé à une distance d'au moins 50 mm de la surface de toit extérieure (2) lorsque la couche de couverture (25, 125, 225, 325, 425) est retirée.

7. Procédé selon la revendication 5 ou 6, dans lequel la traction sur la couche de couverture (25, 125, 225) est dans une direction sensiblement parallèle au second bord (32, 132, 232) de l'élément de jupe (20, 120, 220) .

8. Procédé selon la revendication 5 ou 6, dans lequel la traction sur la couche de couverture (325, 425) est dans une direction sensiblement parallèle au plan de l'élément de jupe (320, 420) et opposée du premier bord (331, 431).

9. Procédé selon l'une quelconque des revendications 5 à 8, dans lequel deux ou plusieurs couches de couverture (25, 125, 225, 325, 425) sont retirées séparément et/ou dans lequel des zones d'affaiblissement dans une ou plusieurs couches de couverture (25, 125, 225, 325, 425) sont brisées avant ou pendant le retrait d'une partie de la couche de couverture (25, 125, 225, 325, 425), laissant une autre partie de la couche de couverture (25, 125, 325, 425) sur la couche adhésive (24, 124, 224, 324, 424).
